# EUROPEAN PATENT SPECIFICATION

(11) **EP 2 922 401 B1**
(45) Date of publication and mention of the grant of the patent: **25.04.2018**
(21) Application number: 13798978.6
(22) Date of filing: 21.11.2013
(51) Int. Cl.: A01N 53/00, A01P 7/04, A01N 25/08

(54) **USE OF A COMPOUND COMPRISING A POLYFLUOROBENZYL MOIETY AGAINST INSECTICIDE-RESISTANT BED-BUGS**
VERWENDUNG EINER VERBINDUNG ENTHALTEND EINE POLYFLUOROBENZYL-GRUPPE GEGEN INSEKTIZIDRESISTENTE BETTWANZEN
UTILISATION D'UN COMPOSÉ CONTENANT UN GROUPE POLYFLUOROBENZYLE CONTRE LES PUNAISES DE LIT RÉSISTANT AUX INSECTICIDES

(30) Priority: 23.11.2012 EP 12194056
(43) Date of publication of application: 30.09.2015
(73) Proprietor: Bayer CropScience AG, 40789 Monheim am Rhein (DE)
(72) Inventor: HORSTMANN, Sebastian, 51381 Leverkusen (DE); SONNECK, Rainer, 51375 Leverkusen (DE); VELTEN, Robert, 40764 Langenfeld (DE); WERNER, Stefan, 10249 Berlin (DE)
(74) Representative: BIP Patents
(86) International application number: PCT/EP2013/074383
(87) International publication number: WO 2014/079928

(56) References cited:
- EP-A1- 0 116 889
- EP-A1- 2 201 841
- WO-A1-2012/150208
- WO-A2-2011/003845
- DE-A1- 19 947 146
- US-A- 6 150 404
- J G SCOTT ET AL.: "Insecticidal Activity of Substituted Benzyl Dichlorovinylcyclopropanecarboxylates on Susceptible and kdr-Resistant Strains of the Southern House Mosquito", J. PESTICIDE SCI., vol. 11, no. 3, 1986, pages 475-477,

## Description

The invention is in the technical field of insect control and relates to the use of a compound comprising a polyfluorobenzyl moiety for controlling insecticide-resistant bed bugs.

Todays main insecticides used for vector control (including mosquitoes and bed bugs) relate to four chemical classes: pyrethroids, organochlorines (including DDT), organophosphates and carbamates. The use of pyrethroids far exceeds that of the other three classes due to its rapid and durable effect and its low toxicity and costs. However, recently resistance against pyrethroids have been reported which causes major concerns for the World Health Organisation and solutions how to tackle the emerging resistance are seen as to be of critical importance for the future vector control management (see e.g. http://www.who.int/malaria/world_malaria_report_2011/WMR2011_chapter4.pdf).

Two main mechanisms of insecticide resistance were identified: target site resistance and metabolic resistance. Target site resistance occurs when the site of action of an insecticide is modified in mosquito populations so that the insecticide no longer binds effectively and the insect is therefore unaffected, or less affected, by the insecticide. Target site resistant mutations can affect acetylcholinesterase, which is the molecular target of organophosphates and carbamates, voltage-gated sodium channels (for pyrethroids and DDT), which is known as *knock-down* resistance (*kdr*), or the GABA receptor (for Dieldrin), which is known as resistance to Dieldrin (*Rdl*). Metabolic resistance occurs when increased levels or modified activities of a detoxifying enzyme system (such as esterases, monooxygenases or glutathione S-transferases (GST)) prevent the insecticide from reaching its intended site of action. Both mechansims of resistances can be found in the same vector populations and sometimes within the same vector. Metabolic resistance, however, seems to be the stronger resistance mechanism and is therefore of greater concern.

Pyrethroids are the only insectides that have obtained WHO recommendation against Malaria vectors or both Indoor Residuals Sprays (IRS) and Long Lasting Insecticidal Mosquito Nets (LLINs), in the form of Alpha-Cypermethrin, Bifenthrin, Cyfluthrin, Permethrin, Deltamethrin, Lambda-Cyhalothrin and Etofenprox. It has been the chemical class of choice in agriculture and public health applications over the last several decades because of its relatively low toxicity to humans, rapid knock-down effect, relative longevity (duration of 3-6 months when used as IRS), and low cost. However, massive use of pyrethroids in agricultural applications and for vector control led to the development of resistance in major malaria and dengue vectors. Strong resistance has e.g. been reported for the pyrethroid Deltamethrin (and Permethrin) for the *Anopheles gambiae* Tiassalé (from southern Côte d'Ivoire) strain (Constant V.A. Edi et al., Emerging Infectious Diseases; Vol. 18, No. 9, September 2012). Pyrethroid resistance was also reported for Permethrin, Deltamethrin and Lambda-Cyhalothrin for the *Aedes aegypti* Cayman Island strain (Angela F. Harris et al., Am. J. Trop. Med. Hyg., 83(2), 2010) and Alpha-Cypermethrin, Permethrin and Lambda-Cyhalothrin for certain Anopheles strains (Win Van Bortel, Malaria Journal, 2008, 7:102).Bed bug control has (again) become a major task as a resurgence of bed bug infestations has occurred over the last 10 years. In this connection, it has also been reported that these insects have developed resistance to pyrethroids such as Deltamethrin and Beta-Cyfluthrin (Zach N. Adelman et al, PloS ONE, October 2011, Vol 6, Issue 10).

Due to the emerging resistance bed bugs against certain pyrethroids there is an ongoing need for alternative solutions and bed bug control management. With the present invention it has now been surprisingly found that compounds comprising a polyfluorobenzyl moiety such as Transfluthrin , Metofluthrin, Momfluorothrin, Meperfluthrin, Dimefluthrin, Fenfluthrin, Profluthrin, Tefluthrin or Heptafluthrin are useful for the to control of insecticide-resistant bed bugs.

Transfluthrin (IUPAC name: (1R,3S)-3-(2,2-Dichlorovinyl)-2,2-dimethyl-1-cyclopropanecarboxylic acid (2,3,5,6-tetrafluorophenyl)methyl ester) is a pyrethroid insecticide mainly known for consumer use against flies, mosquitoes and moths. This chemical is a volatile substance and acts as a contact and inhalation agent.

DE 199 47 146 A1 discloses the use of Transfluthrin impregnated textile carriers to control insects. Table 1 shows the insecticidal activity of Transfluthrin against *Aedes aegypti* (susceptible) and *Culex quingefasciatus* (DDT-resistent). DE 199 47 146 A1 does not disclose the use of Transfluthrin or Metofluthrin alone (without an additional insecticide) against insecticidal-resistant bed bugs.

EP 2 201 841 A1 discloses synergistic combinations with Transfluthrin, Thiacloprid or Acetamiprid and an additional insecticide and/or fungicide. The combinations are mentioned to be active also against resistant *Aedes spp*., *Anopheles spp.* or *Culex spp.* This reference, however, does not disclose that Transfluthrin or Metofluthrin alone (without an additional insecticide) can be used to control insecticidal-resistant bed bugs.

WO2011/003845 A2 discloses a composition comprising chlorfenapyr, a pyrethroid (e.g. Transfluthrin or Metofluthrin) and a special acrylate binder for the impregnation of substrates such as a mosquito net. Also this reference does not disclose that Transfluthrin or Metofluthrin alone (without an additional insecticide) can be used to control insecticidal-resistant bed bugs.

J.G. Scott et al. (J. Pesticide Sci., Vol. 11, no. 3, 1986, pages 475-477) has shown that a Permethrin resistant *Culex quinquefasciatus* mosquito strain is susceptible to Fenfluthrin (see table 1). This reference, however, does not disclose that Fenfluthrin can be used to control insecticidal-resistant bed bugs.

In summary, Transfluthrin is not known to be useful for bed bug management applications. In particular, it is not known that Transfluthrin (in particular alone and not in combination with an additional insecticide) can be used against insecticide-resistant bed bugs that have developed a resistance against at least one pyrethroid compound. Efficacy of various pyrethroid structures such as Transfluthrin against a metabolically resistant strain of *Helicoverpa armigera* was described (Jianguo Tan et al., Pest Management Science; 63:960-968, 2007). However, Jianguo Tan et al. is not relevant for the present invention as it discusses resistance mechanisms in *Helicoverpa armigera* and not bed bugs.

Metofluthrin (IUPAC name: 2,3,5,6-Tetrafluoro-4-(methoxymethyl)benzyl 2,2-dimethyl-3-(prop-1-en-1-yl)cyclopropanecarboxylate) is a pyrethroid insecticide known for the use as a household insecticide such as Transfluthrin. Metofluthrin is not known to be useful for bed bug management. In particular, it is not known that Metofluthrin can be used against insecticide-resistant bed bugs that have developed a resistance against at least one pyrethroid compound. Transfluthrin, Metofluthrin and Tefluthrin (IUPAC name: 2,3,5,6-tetrafluoro-4-methylbenzyl-Z-(1 *RS,3 RS*)-(2-chloro-3,3,3-trifluorprop-1-enyl)-2,2-dimethylcyclopropanecarboxylate) are also e.g. described in the Pesticide Manual, 15th edition (2011), the British Crop Protection Council, London.

Dimefluthrin (IUPAC name: 2,3,5,6-tetrafluoro-4-(methoxymethyl)benzyl (1 *RS,* 3 *RS*, *1 RS*, *3 SR*) 2,2-dimethyl-3-(2-methylprop-1-enyl)cyclopropanecarboxylate) is another pyrethroid insecticide comprising a polyfluorobenzyl moiety and is known for use as a household and public health insecticide (see also EP01004569A1). Fenfluthrin (IUPAC: 2,3,4,5,6-pentafluorobenzyl (1R,3S)-3-(2,2-dichlorovinyl)-2,2-dimethylcyclopropanecarboxylate or 2,3,4,5,6-pentafluorobenzyl (1R)-trans-3-(2,2-dichlorovinyl)-2,2-dimethylcyclopropanecarboxylate) and Profluthrin (IUPAC name: 2,3,5,6-tetrafluoro-4-methylbenzyl (EZ)-(1RS,3RS;1RS,3SR)-2,2-dimethyl-3-prop-1-enylcyclopropanecarboxylate or 2,3,5,6-tetrafluoro-4-methylbenzyl (EZ)-(1RS)-cis-trans-2,2-dimethyl-3-prop-1-enylcyclopropanecarboxylate) are also known pyrethroid compounds that have a polyfluorobenzyl moiety.

Momfluorothrin (IUPAC name: 2,3,5,6-Tetrafluoro-4-(methoxymethyl)benzyl 3-(2-cyano-1-propen-1-yl)-2,2-dimethylcyclopropanecarboxylate), Meperfluthrin (IUPAC name: 2,3,5,6-tetrafluoro-4-(methoxymethyl)benzyl (1,*R*,3 *S*)-3-(2,2-dichlorovinyl)-2,2-dimethylcyclopropanecarboxylate; see also Chinese patent application no.: CN200910111805), Heptafluthrin (IUPAC name: 2,3,5,6-tetrafluoro-4-(methoxymethyl)phenyl] methyl2,2-dimethyl-3-(3,3,3 -trifluoro-1-propen-1-yl)cyclopropanecarboxylate; see also WO2010/043122A1) are other pyrethroid insecticides comprising a polyfluorobenzyl moiety.

The insecticidal compound used according to the invention to control insecticide-resistant bed bugs comprises a polyfluorobenzyl (preferably a tetrafluorobenzyl or pentafluorobenzyl and more preferably a tetraflurobenzyl) moiety and is preferably selected from the group of Transfluthrin, Metofluthrin, Momfluorothrin, Meperfluthrin, Dimefluthrin, Fenfluthrin, Profluthrin, Tefluthrin and Heptafluthrin (more preferably from Transfluthrin, Metofluthrin and Momfluorothrin, even more preferably from Transfuthrin and Metofuthrin and most preferably from Transfluthrin). These compounds (including all their preferred definitions) are herein also referred to as "active ingredient(s)", "active compound(s)" or alternatively "(insecticidal) compound(s) comprising a polyfluorbenzyl moiety".

In a particularly preferred embodiment an active ingredient is used alone (without any additional insecticide; preferably also not a combination of two different insecticidal compounds comprising a polyfluorobenzyl moiety) to control insecticide-resistant (an in particular pyrethroid-resistant) bed bugs. In the most preferred embodiment of the invention, only Transfluthrin alone (without an additional insecticide) is used to control insecticide-resistant (an in particular pyrethorid-resistant) bed bugs.

The term "insecticide-resistant bed bug" further means a bed bug that is resistant to at least one insecticide selected from the group of pyrethroids, organochlorines (including DDT), organophosphates and carbamates.

Pyrethroids in this connection refer more preferably to at least one compound selected from the group of Acrinathrin, Allethrin (d-cis-trans, d-trans), Beta-Cyfluthrin, Bifenthrin, Bioallethrin, Bioallethrin-S-cyclopentyl-isomer, Bioethanomethrin, Biopermethrin, Bioresmethrin, Chlovaporthrin, cis-Cypermethrin, cis-Resmethrin, cis-Permethrin, Clocythrin, Cycloprothrin, Cyfluthrin, Cyhalothrin, Cypermethrin (alpha-, beta-, theta-, zeta-), Cyphenothrin, Deltamethrin, Empenthrin (1R-isomer), Esfenvalerate, Etofenprox, Fenpropathrin, Fenpyrithrin, Fenvalerate, Flubrocythrinate, Flucythrinate, Flufenprox, Flumethrin, Fluvalinate, Fubfenprox, gamma-Cyhalothrin, Imiprothrin, Kadethrin, Lambda-Cyhalothrin, Permethrin (cis-, trans-), Phenothrin (1R-trans isomer), Prallethrin, Protrifenbute, Pyresmethrin, Resmethrin, RU 15525, Silafluofen, tau-Fluvalinate, Terallethrin, Tetramethrin (-1R-isomer), Tralomethrin, ZXI 8901 and Pyrethrin (pyrethrum).

Organophosphate refers preferably to a compound selected from the group of Acephate, Azamethiphos, Azinphos (-methyl, -ethyl), Bromophos-ethyl, Bromfenvinfos (-methyl), Butathiofos, Cadusafos, Carbophenothion, Chlorethoxyfos, Chlorfenvinphos, Chlormephos, Chlorpyrifos(-methyl/-ethyl), Coumaphos, Cyanofenphos, Cyanophos, Chlorfenvinphos, Demeton-S-methyl, Demeton-S-methylsulphon, Dialifos, Diazinon, Dichlofenthion, Dichlorvos/DDVP, Dicrotophos, Dimethoate, Dimethylvinphos, Dioxabenzofos, Disulfoton, EPN, Ethion, Ethoprophos, Etrimfos, Famphur, Fenamiphos, Fenitrothion, Fensulfothion, Fenthion, Flupyrazofos, Fonofos, Formothion, Fosmethilan, Fosthiazate, Heptenophos, Iodofenphos, Iprobenfos, Isazofos, Isofenphos, Isopropyl O-Salicylate, Isoxathion, Malathion, Mecarbam, Methacrifos, Methamidophos, Methidathion, Mevinphos, Monocrotophos, Naled, Omethoate, Oxydemeton-methyl, Parathion (-methyl/-ethyl), Phenthoate, Phorate, Phosalone, Phosmet, Phosphamidon, Phosphocarb, Phoxim, Pirimiphos (-methyl/-ethyl), Profenofos, Propaphos, Propetamphos, Prothiofos, Prothoate, Pyraclofos, Pyridaphenthion, Pyridathion, Quinalphos, Sebufos, Sulfotep, Sulprofos, Tebupirimfos, Temephos, Terbufos, Tetrachlorvinphos, Thiometon, Triazophos, Triclorfon and Vamidothion. In a more preferred embodiment, the term organophosphate refers to a compound selected from the group of Acephate, Chlorpyrifos, Dimethoate, Diazinon, Malathion, Methamidophos, Monocrotophos, Parathion-methyl, Profenofos and Terbufos. Carbamate refers to a compound selected from the group of Alanycarb, Aldicarb, Aldoxycarb, Allyxycarb, Aminocarb, Bendiocarb, Benfuracarb, Bufencarb, Butacarb, Butocarboxim, Butoxycarboxim, Carbaryl, Carbofuran, Carbosulfan, Cloethocarb, Dimetilan, Ethiofencarb, Fenobucarb, Fenothiocarb, Formetanate, Furathiocarb, Isoprocarb, Metam-sodium, Methiocarb, Methomyl, Metolcarb, Oxamyl, Pirimicarb, Promecarb, Propoxur, Thiodicarb, Thiofanox, Trimethacarb, XMC, Xylylcarb and Triazamate. In a more preferred embodiment, the term "carbamate" refers to a compound selected from the group of Aldicarb, Benfuracarb, Carbaryl, Carbofuran, Carbosulfan, Fenobucarb, Methiocarb, Methomyl, Oxamyl, Thiodicarb and Triazamate.

Organochlorine in this connection refers preferably to a compound selected from the group of DDT (Dichlorodiphenyltrichloroethane), Chlordane, Endosulfan, Dieldrin and Lindane, more preferably to DDT alone.

In a more preferred embodiment of the invention, an active ingredient of the invention is used to control insecticide-resistant bed bugs that are resistant against at least one pyrethroid insecticide. In this connection the pyrethroid resistance is against one pyrethroid as defined above. In a more preferred embodiment the term "pyrethroid" refers to a compound selected from the group of Alpha-Cypermethrin, Bifenthrin, Cyfluthrin, Cypermethrin, Deltamethrin, D-D Trans-Cyphenothrin Esfenvalerate, Etofenprox, Lambda-Cyhalothrin, Permethrin, Pyrethrins (Pyrethrum), Phenothrin and Zeta-Cypermethrin. In a preferred embodiment pyrethroid resistance exists in regard to at least one pyrethroid selected from the group of Cyfluthrin, Cypermethrin, Deltamethrin, Lambda-Cyhalothrin, Permethrin. In a more preferred embodiment pyrethroid resistance exists in regard to at least one pyrethroid selected from the group of Cyfluthrin, Cypermethrin, Permethrin; more preferably against at least Cypermethrin.

In another preferred embodiment of the invention and active ingredient is used to control multi-resistant bed bugs. Multi-resistant bed bug refers to a bed bug where several different resistance mechanisms are present simultaneously such as target-site resistance and metabolic resistance. The different resistance mechanisms may combine to provide resistance to multiple classes of products (IRAC publication: "Preventation and Management of Insecticide Resistance in Vectors of Public Health Importance"; second edition; 2011).

The term "insecticide-resistance" is the term used to describe the situation in which the vectors are no longer killed by the standard dose of insecticide (they are no longer susceptible to the insecticide) or manage to avoid coming into contact with the insecticide). See 1.2.; p.27; "Global Plan for Insecticide Resistance Management", WHO 2012). The term vector in this connext refers to a bed bug.

As an example, WHO recommended standard dose of insecticide for indoor residual treatment against mosquito vectors are: Alpha-Cypermethrin 20-30 mg/m², Bifenthrin 25-50 mg/m², Cyfluthrin 20-50 mg/m², Deltamethrin 20-25 mg/m², Etofenprox 100-300 mg/m², Lambda-Cyhalothrin 20-30 mg/m² (http://www.who.int/whopes/Insecticides_IRS_Malaria_09.pdf). WHO recommended standard dose of insecticide products treatment of nets for malaria vector control are: Alpha-Cypermethrin 20-40 mg/m², Cyfluthrin 50 mg/m², Deltamethrin 15-25 mg/m², Etofenprox 200 mg/m², Lambda-Cyhalothrin 10-15 mg/m², Permethrin 200-500 mg/m² (http://www.who.int/whopes/Insecticides_ITN_Malaria_ok3.pdf). WHO recommended standard dose for space spraying against mosquitoes are described in the publication: http://www.who.int/whopes/Insecticides_for_space_spraying_Jul_2012.pdf. WHO recommended insecticide doses for bed bug control are e.g. for Deltamethrin 0.3 - 0.5 g/l or g/kg; Cyfluthrin 0.4 g/l or g/kg; Cypermethrin 0.5-2.0 g/l or g/kg; Permethrin 1.25 g/l or g/kg etc. (see Pesticides and their Application, WHO 2006 ; WHO/CDS/NTD/WHOPES/GCDPP/2006.1).

The term "control" insecticide-resistant bed bugs refers to the possibility to be able to kill and/or repell bed bugs that are insecticide-resistant.

In another preferred embodiment, the invention relates to the use of an active ingredient to control pyrethroid-resistant bed bugs. In a more preferred embodiment, an active compound of the invention is used to control pyrethroid-resistant bed bugs, wherein the bed bugs have a Valine to Leucine mutation (V419L) and/or a Leucine to Isoleucine mutation (L925I) in the voltage-gated sodium channel alpha-subunit gene. In a more preferred embodiment of the invention, an active ingredient is used against the insecticide-resistant bed bug (*Cimex Lectularius*) strain Cincinnati (CIN-1) (Fan Zhu et al., Archives of Insect Biochemistry and Physiology, 2010, Vol. 00, No 0, 1-13).

A skilled person in the art is fully aware that application rates for an active ingredient to control insecticide-resistant bed bugs depend on various factors such as the formulation type, application form, the object/surface to be treated etc. However, as a general guidance the application rate for the control of insecticide-resistant bed bugs is preferably at least 100 mg/l or mg/kg and more preferably 300 mg/l or mg/kg.

According to another preferred embodiment of the invention, an active ingredient is used together with a base material.

In a prefered embodiment of the invention it has been found that an active ingredient can be used with a suitable base material selected from the group of a polymers such thermoplastics or thermosets; plant-based materials; coating/impregnation solutions and/or mixtures thereof to control insecticide-resistant pests.

According to the present invention polymers include synthetic polymers such as thermoplastics or thermosets. Thermosets, also known as a thermosoftening plastics, are polymers that turn to liquid when heated and freeze to a rigid state when cooled sufficiently. Most thermoplastics are high-molecular-weight polymers whose chains associate through weak Van der Waals forces (e.g. polyethylene); stronger dipole-dipole interactions and hydrogen bonding (e.g. nylon) or even stacking of aromatic rings (e.g. polystyrene). Thermoplastic polymers differ from thermosetting polymers (e.g. phenolics, epoxies) in that they can be remelted and remoulded. Many thermoplastic materials are addition polymers; e.g. vinyl chain-growth polymers such as polyethylene and polypropylene; others are productions of condensation or other forms of polyaddition polymerisation, such as the polyamides or polyester. Polymers such as thermoplastics and rubber polymers can be selected from the group of Acrylonitrile Butadiene Styrene (ABS), Acrylic (PMMA), Celluloid, Cellulose acetate, Cyclic Olefin Copolymer (COC), Ethylene-Vinyl Acetate (EVA), Ethylene Vinyl Alcohol (EVOH), Fluoroplastics (PTFE, alongside with FEP, PFA, CTFE, ECTFE, ETFE), Ionomers, Liquid Crystal Polymer (LCP), Polyoxymethylene (POM or Acetal), Polyacrylates (Acrylic), Polyacrylonitrile (PAN or Acrylonitrile), Polyamide (PA or Nylon), Polyamide-imide (PAI), Polyaryletherketone (PAEK or Ketone), Polybutadiene (PBD), Polybutylene (PB), Polybutylene Terephthalate (PBT), Polycaprolactone (PCL), Polychlorotrifluoroethylene (PCTFE), Polyethylene Terephthalate (PET), Polycyclohexylene dimethylene Terephthalate (PCT), Polycarbonate (PC), Polyhydroxyalkanoates (PHAs), Polyketone (PK), Polyester, Polyethylene (PE), Polyetheretherketone (PEEK), Polyetherketoneketone (PEKK), Polyetherimide (PEI), Polyethersulfone (PES), Chlorinated Polyethylene (CPE), Olyimide (PI), Polylactic Acid (PLA), Polymethylpentene (PMP), Polyphenylene Oxide (PPO), Polyphenylene Sulfide (PPS), Polyphthalamide (PPA), Polypropylene (PP), Polystyrene (PS), Polysulfone (PSU), Polytrimethylene terephthalate (PTT), Polyurethane (PU), Polyvinyl Acetate (PVA), Polyvinyl Chloride (PVC), Polyvinylidene Chloride (PVDC), Styrene-acrylonitrile (SAN).

In another preferred embodiment of the invention, an active ingredient is used together with polymers selected from the group of polyester, polyamide, polyolefins (such as polyethylene, polypropylene). Transfluthrin and/or Metofluthrin easily can be added during processing of the polymeric material. As the processing temperatures of common polymers such as thermoplastics are in a range of 130-320°C (e.g. extrusion, compounding, film blowing, spinning, calendaring, foaming etc.), Transfluthrin and/or Metofluthrin might melt during processing as well and are solidifying together with the matrix polymer during cool-down giving a homogenous material compound containing the desired amount of insecticide. The addition of an active ingredient can also be done in a two-step process, with a concentrate (masterbatch) produced via mixing of the polymer with an active ingredient and a second processing step where the active ingredient is further diluted by adding additional polymers during processing. Manufactering processes of polymers (such as polypropylene etc.) with Transfluthrin was e.g. in more detailed described in WO97/29634.

The concentration of the active ingredient in (respectively on) polymers can be varied within a relatively wide concentration range (for example from 1% to 15% by weight). The concentration should be chosen according to the field of application such that the requirements concerning efficacy, durability and toxicity are met.

According to the present invention the term "thermoset" refers to a thermosetting plastic which is a polymer material that irreversibly cures. The cure may be done through heat (generally above 200 °C (392 °F)), through a chemical reaction (two-part epoxy, for example), or irradiation such as electron beam processing. Thermoset materials are usually liquid or malleable prior to curing and designed to be molded into their final form, or used as adhesives. Others are solids like that of the molding compound used in semiconductors and integrated circuits (IC). Once hardened a thermoset resin cannot be reheated and melted back to a liquid form. According to IUPAC recommendation: A thermosetting polymer is a prepolymer in a soft solid or viscous state that changes irreversibly into an infusible, insoluble polymer network by curing. Curing can be induced by the action of heat or suitable radiation, or both. A cured thermosetting polymer is called a thermoset. Some examples of thermosets are: Polyester fibreglass systems (sheet molding compounds and bulk molding compounds); vulcanized rubber; bakelite, a phenol-formaldehyde resin; duroplast; urea-formaldehyde foam; melamine resin; epoxy resin; polyimides; cyanate esters or polycyanurates.

The term "plant-based natural materials" refers to natural derived substrates/fibers such cellulose-based materials (paper/cardboard), cotton, sisal, jute, wood, flax, cotton, bamboo, hemp, wool etc.

For the production of polymers such as thermoplastics, thermosets or composite materials and mixtures thereof (e.g. thermoplastics mixed with other thermoplastics e.g. thermoplastics with plant-based natural materials) additional additives can be used such a e.g. metal deactivators, peroxide scavengers, basic costabilizers, nucleating agents, plasticizers, lubricants, UV-protecting agents, emulsifiers, pigments, viscosity modifiers, catalysts, flow control agents, optical brighteners, antistatic agents and blowing agents, benzofuranones and indolinones, fluorescent plasticizers, mould release agents, flame-retardant additives, synergists, antistatic agents such as sulphonate salts, pigments and also organic and inorganic dyes and also compounds containing epoxy groups or anhydride groups.

The term "coating/impregnation solution", as used herein, shall refer to a solution that is later sprayed to form a coating, a part of a coating, or is used for impregnation and include the herein discussed active ingredients as well as other coating/impregnation solution components such as but not limited to solvents, polymers, oils, fats, natural resins, tensides, surfactants, emulgators, stabilizers, salts thickeners, fragrants, pigments and/or other additives. Coating/impregnation solutions are preferably liquid at room temperature (25 °C).

According to the present invention the term "coatings/impregnation" refers to a (preferably liquid) solution that is applied to the surface of an object, usually referred to as the substrate (which can also be a base material) or the object is dipped into the solution.

In another preferred embodiment the active ingredient(s) of the invention is/are preferably used with the base material in a concentration of below 50 weight per cent (wt%), preferred below 30 wt%, more preferably below 20, and especially preferred below 15 wt% (the combination of the active ingredient and the base material equals 100 wt%).

The polymers of the present invention can be processed into miscellaneous products such as for example, filaments, fabrics, chips, pellets, pearls, foams, foils, pellets, plates, air-cushioning materials, films, nets, profiles, sheets, textiles, wires, threads, tapes, cable and pipe linings, casings for electrical instruments (for example in switch boxes, aircraft, refrigerators, etc.).

In another preferred embodiment of the invention, an active ingredient isused to control insecticide-resistant bed bugs, preferably with a base material such as a polyolefin, polyester and/or polyamide via the contact and gaseous phase (without any additional addition of heat beyond the existing ambient temperature). Contact phase means that the bed bugs come into direct contact with the active ingredients of the invention on the base material whereas gaseous phase means that the active ingredient of the invention are released from the base material and contact (and control) the bed bugs via the gaseous phase (vapour phase).

According to the present invention, the term "knock-down" describes the state of an animal on its back or side, which is still capable of uncoordinated movement including short periods of flying.

According to the present invention, the term "mortality" describes an immobile state of animal on its back or side.

### Examples

### 1. Efficiency of Transfluthrin against bed bugs (Cimex Lectularius, strain Cincinnati (CIN-1)

To produce a suitable preparation Transfluthrin was dissolved in acetone in various concentrations (0.1 mg Transfluthrin/ml; 0.01 mg Transfluthrin/ml and 0.001 mg Transfluthrin/ml). Efficacy tests were done by placing 10 bed bug test animals (*Cimex Lectularius*, strain Cincinnati (CIN-1)) onto a glazed tile. The prepared solutions in various concentractions were sprayed with a glass nozzle onto the bed bugs on the glazed tile. After spraying the bed bugs were transferred to plastic cups. 5 minutes, 10 minutes, 15 minutes, 20 minutes, 0.5 hour, 1 hour, 2 hour, 4 hour and 24 hours after the treatment, the knock-down proportion of the test animals was determined.

**Table 1: Efficacy of Transfluthrin against Cimex Lectularius, strain Cincinnati (CIN-1).**

| | **Amount of animals that are knocked down/killed** | | | | | | | | |
|---|---|---|---|---|---|---|---|---|---|
| **Time after Spray Treatment (in Minutes)** | **5** | **10** | **15** | **20** | **30** | **60** | **120** | **240** | **1440** |
| 0.1 mg Transfluthrin/ml Aceton | n.d. | 9 | 10 | 10 | 10 | 10 | 10 | 10 | 9 |
| 0.01 mg Transfluthrin/ ml Aceton | n.d. | 6 | 9 | 10 | 10 | 10 | 10 | 10 | 7 |
| 0.001 mg Transfluthrin/ ml Aceton | n.d. | 0 | 0 | 0 | 0 | 1 | 1 | 0 | 3 |
| Untreated Control | n.d. | 0 | 0 | 0 | 0 | 0 | 0 | 0 | 1 |

Table 1 shows that Transfluthrin is efficient against an insecticide-resistant bed bug strain.

## Claims

1. Use of an insecticidal compound comprising a tetrafluorobenzyl or pentafluorobenzyl moiety to control insecticide-resistant bed bugs **characterized in that** the insecticidal compound comprising a tetrafluorobenzyl or pentafluorobenzyl moiety is used alone and not in combination with another insecticide to control insecticide-resistant bed bugs.

2. Use according to claim 1, wherein the compound comprising a tetrafluorobenzyl or pentafluorobenzyl moiety is selected from the group of Transfluthrin, Metofluthrin, Momfluorothrin, Meperfluthrin, Dimefluthrin, Fenfluthrin, Profluthrin, Tefluthrin and Heptafluthrin.

3. Use according to claim 1 or 2, the compound comprising a tetrafluorobenzyl or pentafluorobenzyl moiety is selected from the group of Transfluthrin and Metofluthrin.

4. Use according to one of the claims 1 to 3, wherein the insecticide-resistant bed bugs are resistant against at least one pyrethroid insecticide that does not comprise a polyfluorobenzyl moiety.

5. Use according to one of the preceding claims wherein the pyrethroid is selected from the group consisting of Alpha-Cypermethrin, Bifenthrin, Cyfluthrin, Cypermethrin, Deltamethrin, D-D Trans-Cyphenothrin Esfenvalerate, Etofenprox, Lambda-Cyhalothrin, Permethrin, Pyrethrins (Pyrethrum), Phenothrin, and Zeta-Cypermethrin.

6. Use according to claim 5 wherein the pyrethroid is selected from the group of Cyfluthrin, Cypermethrin, Deltamethrin, Lambda-Cyhalothrin and Permethrin.

7. Use according to one of the claims 1 to 6 wherein the insecticide-resistant bed bugs have a Valine to Leucine mutation (V419L) and/or a Leucine to Isoleucine mutation (L925I) in the voltage-gated sodium channel alpha-subunit gene.

## Patentansprüche

1. Verwendung einer insektiziden Verbindung umfassend eine Tetrafluorbenzyl- oder Pentafluorbenzylgruppe für die Bekämpfung von insektizidresistenten Bettwanzen, **dadurch gekennzeichnet, dass** die insektizide Verbindung umfassend eine Tetrafluorbenzyl- oder Pentafluorbenzylgruppe allein und nicht in Kombination mit einem anderen Insektizid für die Bekämpfung von insektizidresistenten Bettwanzen eingesetzt wird.

2. Verwendung nach Anspruch 1, wobei die Verbindung umfassend eine Tetrafluorbenzyl- oder Pentafluorbenzylgruppe aus der Gruppe Transfluthrin, Metofluthrin, Momfluorothrin, Meperfluthrin, Dimefluthrin, Fenfluthrin, Profluthrin, Tefluthrin und Heptafluthrin ausgewählt ist.

3. Verwendung nach Anspruch 1 oder 2, wobei die Verbindung umfassend eine Tetrafluorbenzyl- oder Pentafluorbenzylgruppe aus der Gruppe Transfluthrin und Metofluthrin ausgewählt ist.

4. Verwendung nach einem der Ansprüche 1 bis 3, wobei die insektizidresistenten Bettwanzen gegen mindestens ein Pyrethroidinsektizid, das keine Polyfluorbenzylgruppe umfasst, resistent sind.

5. Verwendung nach einem der vorhergehenden Ansprüche, wobei das Pyrethroid aus der Gruppe bestehend aus Alpha-Cypermethrin, Bifenthrin, Cyfluthrin, Cypermethrin, Deltamethrin, D-D-Trans-Cyphenothrin, Esfenvalerat, Etofenprox, Lambda-Cyhalothrin, Permethrin, Pyrethrinen (Pyrethrum), Phenothrin und Zeta-Cypermethrin ausgewählt ist.

6. Verwendung nach Anspruch 5, wobei das Pyrethroid aus der Gruppe Cyfluthrin, Cypermethrin, Deltamethrin, Lambda-Cyhalothrin und Permethrin ausgewählt ist.

7. Verwendung nach einem der Ansprüche 1 bis 6, wobei die insektizidresistenten Bettwanzen eine Valinzu-Leucin-Mutation (V419L) und/oder eine Leucinzu-Isoleucin-Mutation (L925I) in dem Gen für die alpha-Untereinheit des spannungsabhängigen Natriumkanals aufweisen.

## Revendications

1. Utilisation d'un composé insecticide comprenant un motif tétrafluorobenzyle ou pentafluorobenzyle, afin de contrôler les punaises de lit résistants aux insecticides, **caractérisée en ce que** le composé insecticide comprenant un motif tétrafluorobenzyle ou pentafluorobenzyle est utilisé seul et non en combinaison avec un autre insecticide afin de contrôler les punaises de lit résistants aux insecticides.

2. Utilisation selon la revendication 1, dans laquelle le composé comprenant un motif tétrafluorobenzyle ou pentafluorobenzyle est choisi dans le groupe constitué par la transfluthrine, la métofluthrine, la momfluorothrine, la méperfluthrine, la diméfluthrine, la fenfluthrine, la profluthrine, la téfluthrine et l'heptafluthrine.

3. Utilisation selon la revendication 1 ou 2, le composé comprenant un motif tétrafluorobenzyle ou pentafluorobenzyle étant choisi dans le groupe constitué par la transfluthrine et la métofluthrine.

4. Utilisation selon l'une des revendications 1 à 3, dans laquelle les punaises de lit résistants aux insecticides sont résistants contre au moins un insecticide à base de pyréthrinoïde qui ne comprend pas de motif polyfluorobenzyle.

5. Utilisation selon l'une des revendications précédentes, dans laquelle le pyréthrinoïde est choisi dans le groupe constitué par l'alpha-cyperméthrine, la bifenthrine, la cyfluthrine, la cyperméthrine, la deltaméthrine, la D-D trans-cyphénothrine, l'esfenvalérate, l'étofenprox, la lambda-cyhalothrine, la perméthrine, les pyréthrines (pyrèthre), la phénothrine, et la zétacyperméthrine.

6. Utilisation selon la revendication 5, dans laquelle le pyréthrinoïde est choisi dans le groupe constitué par
la cyfluthrine, la cyperméthrine, la deltaméthrine, la lambda-cyhalothrine et la perméthrine.

7. Utilisation selon l'une des revendications 1 à 6, dans laquelle les punaises de lit résistantes aux insecticides possèdent une mutation valine en leucine (V419L) et/ou une mutation leucine en isoleucine (L925I) dans le gène de la sous-unité alpha des canaux sodiques dépendants du voltage.
